Europäisches Patentamt

European Patent Office

Office européen des brevets

(11) Numéro de publication : **0 017 547**
**B1**

## (12) FASCICULE DE BREVET EUROPÉEN

(45) Date de publication du fascicule du brevet :
04.07.84

(21) Numéro de dépôt : 80400376.2

(22) Date de dépôt : 20.03.80

(51) Int. Cl.³ : **G 01 S 11/00, G 01 V 3/12,**
**G 08 B 13/24, B 66 B 13/26,**
**H 03 K 17/955**

(54) Détecteur de proximité et son utilisation.

(30) Priorité : 28.03.79 FR 7908410

(43) Date de publication de la demande :
15.10.80 Bulletin 80/21

(45) Mention de la délivrance du brevet :
04.07.84 Bulletin 84/27

(84) Etats contractants désignés :
**AT BE CH DE FR GB IT LU NL SE**

(56) Documents cités :
**FR-A- 2 173 804**
**GB-A- 1 529 862**
**US-A- 2 720 284**
**US-A- 3 018 851**
**US-A- 3 614 724**
**US-A- 3 794 992**
**US-A- 3 846 790**

(73) Titulaire : **SOCIETE LOGILIFT S.A.R.L.**
**Hameau de la Becque**
**Avelin F-59710 Pont A Marcq (FR)**

(72) Inventeur : **Evin, Jean**
**Hameau de la Becque**
**Avelin F-59710 Pont a Marcq (FR)**

(74) Mandataire : **Ecrepont, Robert Pierre**
**12 Place Simon Vollant**
**F-59800 Lille (FR)**

Jouve, 18, rue St-Denis, 75001 Paris, France

## Description

L'invention se rapporte à un détecteur de proximité en vue de déceler la présence d'un corps à une certaine distance d'un élément comme par exemple d'un intrus à proximité d'une entrée d'un bâtiment ou d'un obstacle sur la trajectoire d'un mobile tel l'outil d'une presse.

Bien que non exclusivement, elle vise toutefois plus particulièrement l'application de ce détecteur aux bords verticaux d'une porte à fermeture automatique et notamment aux portes palières et/ou des cabines d'ascenseurs et monte-charges. Dans cette application particulière, le but est évidemment que la présence d'une personne ou d'un objet susceptible d'être heurté lors de la fermeture de la porte soit détecté alors que le bord de la porte en est encore à une certaine distance, pour qu'à partir du signal issu de ce détecteur, on puisse alors commander le blocage de la porte et donc interrompre sa fermeture voire même commander sa réouverture si le niveau de ce signal dépasse un certain seuil.

Pour cette application à la réouverture de portes d'ascenseurs, il existe déjà divers dispositifs tendant à limiter sinon éviter les dommages tels que notamment :

— des détecteurs d'effort, qui toutefois ne décèlent la présence de la personne ou de l'objet qu'en le heurtant

— des palpeurs pneumatiques, qui malheureusement, lorsqu'ils sont sensibles sont aussi très fragiles

— des cellules photoélectriques, mais dont la zone de sensibilité est limitée au faisceau balayé par le rayon lumineux

— des radars, qui, outre un coût très élevé, ont l'inconvénient de ne pas être sélectifs.

On connaît également des détecteurs de proximité comprenant (brevet US 3.018.851) :

— un oscillateur à très basse fréquence et de faible puissance dont le point d'émission est relié à la terre pour y émettre un signal d'amplitude et de fréquence constantes

— au moins une antenne de réception, scindée en plusieurs tronçons indépendants, fixée sur la partie de l'élément dont on surveille l'abord mais située en dehors du champ de rayonnement direct des éléments qui environnent cette partie et qui sont couplés à la terre mais qui conservent une distance fixe par rapport à ladite partie

— un circuit de traitement de la tension induite à chaque tronçon d'antenne de réception par les ondes aussi bien réfléchies que rayonnées par les corps qui environnent l'antenne, afin d'émettre un signal final dont l'intensité sera modifiée en fonction de l'existence d'un corps étranger à proximité de ladite antenne.

Fonctionnant par lecture des différences de couplage capacitif à la terre de chaque tronçon d'antenne, les détecteurs de ce type sont bien adaptés pour résoudre le problème de la détection d'un obstacle à la fermeture des portes. Malheureusement, dans les détecteurs de ce type connus à ce jour, le traitement des signaux issus des tronçons d'antenne s'opère par équilibrage dans un circuit en pont (brevet US 3.018.851 et 2.720.284), et il en résulte que le système est très instable et de réglage complexe.

C'est pourquoi, un résultat que l'invention vise à obtenir est un détecteur très stable, de réglage simple et qui par ailleurs, est peu coûteux et facile à adapter sur l'élément à proximité duquel on veut déceler toute approche d'un corps et par exemple sur des portes conçues spécialement ou existantes.

Pour cela, l'invention a pour objet un détecteur du type cité plus haut, notamment caractérisé conformément à la revendication 1.

Elle a également pour objet les éléments pourvus de ce détecteur.

Elle sera bien comprise à l'aide de la description ci-après faite, à titre d'exemple non limitatif, en regard du dessin ci-anexé qui représente, dans son application à une porte d'ascenseur :

figure 1   le schéma bloc de l'ensemble recevant les signaux,

figure 2   en vue symbolique, un circuit de traitement des signaux issus des antennes,

figure 3   vus en coupe, les bords de la porte pourvue du détecteur.

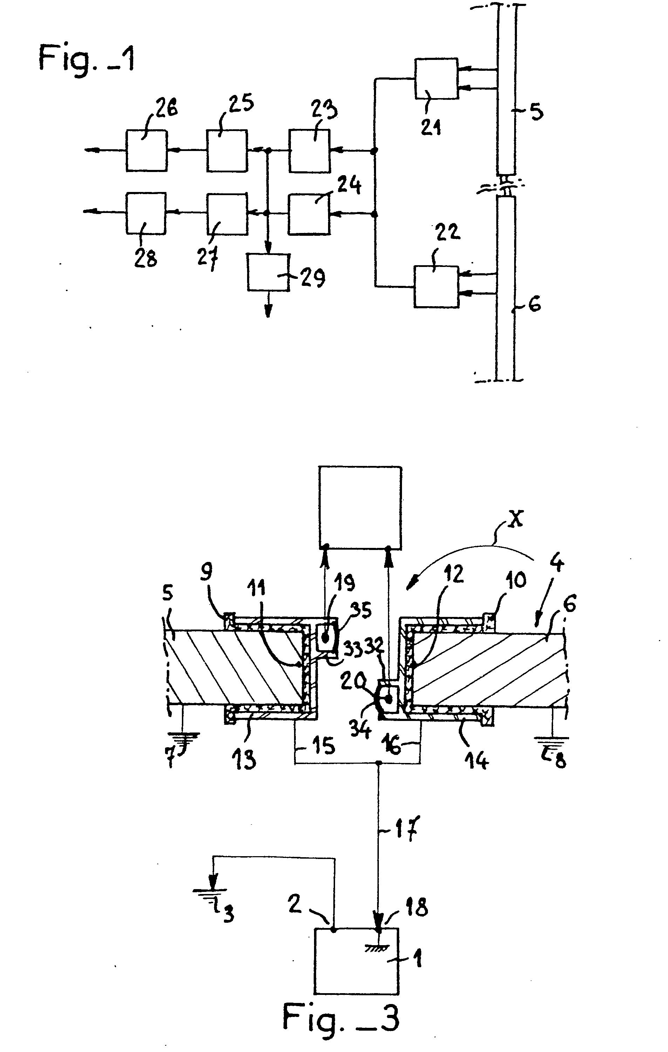

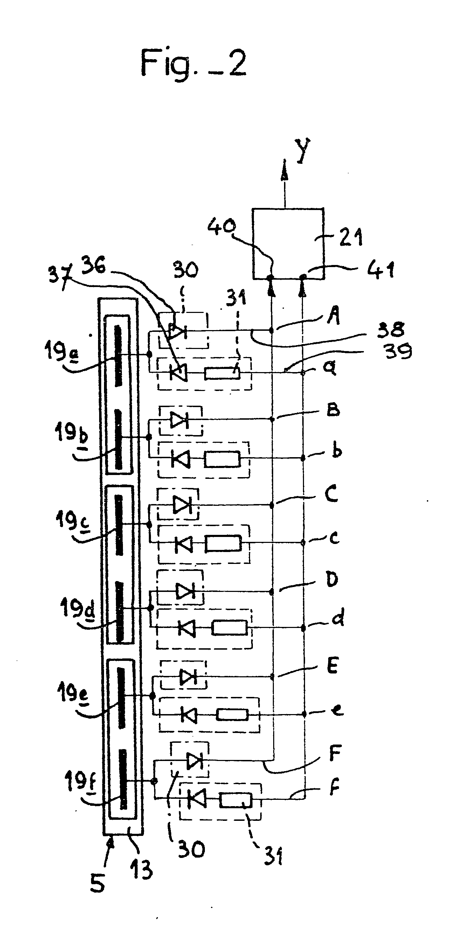

En se reportant au dessin, on voit que le dispositif comprend un oscillateur 1 à très basse fréquence (figure 3), par exemple de huit kilohertz et de faible puissance dont le point d'émission 2 est relié à la terre 3 pour y émettre un signal sinusoïdal d'amplitude et accessoirement de fréquence constantes. De ce fait, toute personne s'approchant étant nécessairement plus ou moins couplée à la terre, elle est alimentée en énergie qu'elle rayonne dans son environnement immédiat sous la forme d'ondes électro-magnétiques.

Il en est de même de tout corps métallique raccordé à la terre, tel que dans cet exemple non limitatif d'une porte 4 d'ascenseur, peuvent l'être les deux panneaux 5, 6 du fait de leur raccordement à la terre en 7, 8. Les bords 11, 12 des panneaux reçoivent alors après interposition d'un point 9, 10 en matériau isolant de tout type connu, un écran métallique 13, 14, par exemple en aluminium.

Ces écrans 13, 14 sont, par des jonctions 15, 16, 17, reliés en 18 au potentiel de référence de l'émetteur 1. Devant chaque écran 13, 14 et donc en dehors du champ de rayonnement direct des panneaux 5, 6, chaque bord de porte reçoit une antenne 19, 20, scindée en plusieurs tronçons indépendants, par exemple en six tronçons 19 a, à 19 f (figure 2).

Ces tronçons d'antenne ne reçoivent que les ondes réfléchies par certains corps et surtout les ondes rayonnées par d'autres, qui sont plus ou moins couplés à la terre ou qui restituent une partie de leur tension induite.

En l'absence dans le champ d'ondes, d'usagers ou d'objets et en général de tout corps étranger, les ondes ainsi réfléchies et/ou rayonnées par les parties fixées à demeure agissent sur les divers tronçons d'antenne dans des proportions qui restent constantes.

Dès qu'un corps étranger est à proximité d'un des tronçons d'antenne, sur ce tronçon, ce corps étranger rayonne ou réfléchit un champ de valeur supérieure, ce qui modifie alors l'intensité de réception de ce tronçon d'antenne et de son signal de sortie et ce d'autant plus fortement que le corps étranger est plus proche.

C'est le traitement, dans un analyseur 21, 22 des variations de proportion des signaux de sortie des tronçons d'antenne qui permet de détecter et d'apprécier la proximité plus ou moins immédiate de ce corps étranger.

Avant analyse, les signaux de sortie peuvent évidemment être réglés à une valeur prédéterminée pour, en l'absence de corps étrangers, être tous égaux.

Pour apprécier la distance de l'objet et donc l'urgence d'une intervention, le signal est présenté à deux portes logiques 23, 24 (figure 1) tels des triggers réglés à des seuils différents, la première commandant au travers d'un circuit de retard 25 un relais 26 de blocage des portes, alors que l'autre commande également au travers d'un circuit de retard 27 le relais 28 de réouverture des portes.

Un circuit temporisé 29 décèle la persistance des commandes de blocage ou de réouverture au-delà d'un temps préréglé et actionne une alarme.

Selon une caractéristique de l'invention les tronçons d'antenne sont raccordés à des moyens de prélèvement de deux signaux distincts en rapport, l'un avec la valeur crête de la tension induite sur le tronçon dont la tension est la plus élevée, l'autre avec la valeur moyenne des tensions de tous les tronçons, ainsi qu'à des moyens de comparaison de ces deux signaux.

Dans un mode préféré de réalisation, ces moyens de prélèvement et d'analyse comprennent, tout d'abord des moyens 36, 37 de redressement, des alternances positives et négatives du signal alternatif qu'il reçoit, tels que des diodes.

Ces moyens 36, 37 délivrent, dans des circuits 38, 39 distincts, deux signaux dits :
— premier signal « A » à « F » pour les alternances positives,
— deuxième signal « a » à « f » pour les alternances négatives, avec, évidemment, en l'absence de corps étrangers, et ce, grâce à un ajustement initial, a = A, b = B, c = C, d = D, f = F.

Tous les circuits 38 des premiers signaux, lesquels sont donc issus des alternances positives, sont raccordés à l'une des entrées 40 d'un comparateur 21 tel un amplificateur opérationnel et ce sous le contrôle d'une porte 30 (fig. 2), afin de n'envoyer effectivement à cette entrée que la valeur du premier signal A, ou B, ou C, ou D, ou E, ou F issu du tronçon dont la tension est la plus élevée.

Pour leur part tous les circuits 39 des seconds signaux lesquels sont issus des alternances négatives sont raccordés à l'autre entrée 41 du comparateur 21 sous le contrôle d'un limiteur 31 tel une résistance, afin de n'envoyer effectivement à cette entrée que la moyenne des tensions des différents signaux soit, dans le présent exemple, que la somme du sixième (1/6) de chacun des signaux a, b, c, d, e, f.

Le comparateur additionne alors ces deux signaux distincts et, pendant le réglage initial cité plus haut, lequel est effectué en l'absence de corps étranger, les signaux A et F et a à f des tronçons d'antennes étant ajustés pour être tous identiques, les détections sur les alternances positives et négatives s'équilibrent et le signal Y de sortie est nul.

En effet, si l'influence des conditions extérieures est représentée par x, on a :

$Y = x$ (A ou B ou C ou D ou E ou F + a/6 + b/6 + c/6 + d/6 + e/6 + f/6) soit $Y = x$ (A ou B ou C ou D ou E ou F + ($-$ A/6 $-$ B/6 $-$ C/6 $-$ D/6 $-$ E/6 $-$ F/6) et tous les signaux A à F étant identiques, on a

$Y = x$ (A $-$ (6A/6)) = 0.

Par contre, dès qu'un corps étranger s'approche, les signaux reçus par les divers tronçons d'antennes sont différents et par exemple, on aura :
— d'une part, a = $-$ 2, b = $-$ 2, c = $-$ 2, d = $-$ 2, e = $-$ 1, f = $-$ 1.

En sortie du comparateur 21, le signal Y sera alors égal à :

$Y = x$ (2 $-$ (10/6)) = 2x/6.

Dans ce mode préféré de réalisation la porte 30 est formée par les diodes 36 qui de manière connue ne laissent passer que la valeur crête et ce pour autant que par ailleurs elles ne soient pas, du fait de leur raccordement par leurs bases, bloquées par un signal supérieur issu d'une autre diode.

Grâce à la scission de l'antenne en plusieurs tronçons et au mode de traitement des signaux, le signal Y de sortie du comparateur 21 a l'avantage d'être accentué et surtout, lorsque l'équilibre est réalisé, d'être très peu influencé par les conditions extérieures au fonctionnement d'où une grande stabilité de détection.

Dans l'exemple décrit où il s'agit d'une porte à deux panneaux mobiles, sont utilisées deux antennes 19, 20 en plusieurs tronçons, mais évidemment dans le cas d'une porte à un seul panneau mobile, il n'y aura qu'une antenne 19, mais par contre, il y aura un écran sur les deux bords verticaux délimitant l'ouverture soit sur le bord du panneau mobile et sur le bord du panneau fixe ou montant, afin que le montant ne rayonne pas directement vers l'antenne, lorsque la porte est fermée ou presque.

Dans un mode préféré, l'écran métallique est réalisé par un profilé en U coiffant le bord du panneau de la porte ou du montant et portant extérieurement une réglette 32, 33 creusée pour loger l'antenne et fermée ensuite à sa partie avant par une plaque 34, 35 perméable aux ondes.

Selon une autre caractéristique de l'invention, les réglettes 32, 33 logeant les antennes des deux panneaux d'une porte sont de largeur inférieure à la moitié de celle de l'écran et sont décalées l'une par rapport à l'autre : elles jouxtent donc chacune l'une des faces du panneau et se placent l'une à côté de l'autre en position porte fermée.

## Revendications

1. Détecteur de proximité en vue de déceler la présence d'un corps à une certaine distance d'un élément (5, 6), comprenant notamment :
— un oscillateur (1) à basse fréquence et de faible puissance dont le point d'émission (2) est relié à la terre (3) pour y émettre un signal sinusoïdal d'amplitude et de fréquence constantes,
— au moins une antenne de réception (19, 20), scindée en plusieurs tronçons indépendants, fixés sur la partie (11, 12) de l'élément (5, 6) dont on surveille l'abord mais située en dehors du champ de rayonnement « direct » des éléments couplés à la terre qui, de manière normale, environnent cette partie et n'agissent donc qu'indirectement sur les différents tronçons d'antenne et ce, dans des proportions qui restent constantes,
— un circuit de traitement des tensions induites à chaque tronçon d'antenne de réception par les ondes aussi bien réfléchies que rayonnées à la fois par les éléments qui, de manière normale, environnent l'antenne mais aussi par tout corps étranger et qui, à partir desdites tensions induites, élabore tout d'abord deux signaux distincts dits premier et second signaux, puis les envoie à un moyen qui émet un signal final dont l'intensité sera modifiée en fonction des caractéristiques de ces premier et second signaux et donc en fonction de la présence d'un corps étranger à proximité des tronçons de ladite antenne,
— des moyens d'analyse de ces signaux, ce détecteur étant caractérisé en ce que le circuit de traitement comprend, raccordés à chacun des tronçons d'antenne, des moyens (36, 37) de redressement des alternances positives et négatives du signal alternatif qu'ils reçoivent, ces moyens délivrant chacun dans des circuits distincts (38, 39) deux signaux dits premier signal et deuxième signal et en ce que tous les circuits (38) des premiers signaux, lesquels sont issus des alternances positives, sont raccordés à l'une (40) des entrées d'un comparateur (21) sous le contrôle d'une porte (30) n'envoyant effectivement à cette entrée que le premier signal issu du tronçon dont la tension est la plus élevée, alors que tous les circuits (39) des deuxièmes signaux, lesquels sont issus des alternances négatives, sont raccordés à l'autre entrée (41) de ce comparateur (21) sous le contrôle d'un limiteur (31) afin de n'envoyer à cette entrée que la somme des seconds signaux divisés par le nombre de tronçons.

2. Détecteur selon la revendication 1, appliqué à une porte (4) dont les deux bords verticaux (11, 12) délimitant l'ouverture sont :
— d'une part, formés par les bords aussi bien de deux panneaux mobiles (5, 6) que d'un panneau mobile et d'un panneau fixe, tel un montant et,
— d'autre part, après interposition éventuelle d'un joint (10) en matériau isolant, gernis d'un écran métallique (13, 14) ce détecteur étant caractérisé en ce que cet écran (13, 14) est formé d'un profilé en U coiffant le bord du panneau correspondant et portant extérieurement une réglette (32, 33) creusée pour loger l'antenne.

3. Détecteur selon la revendication 2, caractérisé en ce que la réglette (32, 33) logeant l'antenne a une largeur au plus égale à la moitié de la largeur du profilé (13, 14) et en ce que, dans une porte à deux panneaux mobiles, les deux gorges jouxtent chacune une face distincte de la porte.

4. Utilisation d'un détecteur selon l'une quelconque des revendications 1 à 3 pour la surveillance de l'abord d'un élément et notamment d'une porte (4) ayant au moins un panneau (5, 6).

## Claims

1. A proximity detector for detecting the presence of a body at a certain distance from an element (5, 6), comprising in particular :
— a low frequency and low power oscillator (1), the output point (2) of which is connected to earth (3) and emits a sinusoidal signal with a constant amplitude and frequency,
— at least one receiving antenna (19, 20), which is split into a plurality of independent sections, is fixed on the part (11, 12) of the element (5, 6) whose approach is to be monitored, but which is situated outside the « direct » radiation field of the elements connected to earth, which in the usual manner surround this part and, therefore, only act indirectly on the different antenna sections and in proportions which remain constant,
— a circuit for processing the voltages induced at each receiving antenna section by the waves both reflected and radiated by the elements which in the usual manner surround the antenna and at the same time also by any foreign body, and which circuit, starting from the said induced voltages, firstly produces two different signals referred to as first and second signals, then sends them to a means which emits a final signal, the strength of which will be modified as a function of the characteristics of these first and second signals and thus as a function of the presence of a foreign body close to the sections of the said antenna,
— and means for analysing these signals, characterized in that the processing circuit comprises means (36, 37), connected to each of the antenna sections, for rectifying the positive and negative cycles of the alternating signal which they receive each of these means sending two signals, referred to as the first and the second signal, in different circuits (38, 39), and in that all the circuits (38) of the first signals, which result from the positive cycles, are connected to one (40) of the inputs of a comparator (21) under the control of a gate (30) which effectively only sends to this input the first signal sent from the section whose voltage is the highest, whereas all the circuits (39) of the second signals, which result from the negative cycles, are connected to the other input (41) of this comparator (21) under the control of a limiter (31) so as to send to this input only the sum of the second signals divided by the number of sections.

2. A detector according to claim 1, applied to a door (4) whose two vertical edges (11, 12) delimiting the opening are :

— on the one hand, formed by the edges either of two mobile panels (5, 6) or of one mobile panel and one fixed panel such as an upright and,

— on the other hand, after the possible interposition of a seal (10) made of insulating material, provided with a metal screen (13, 14), characterized in that this screen (13, 14) is formed by a U-shaped profiled section overlapping the edge of the corresponding panel and carrying on the outside a strip (32, 33) with a hollow for accomodating the antenna.

3. A detector according to claim 2, characterized in that the strip (32, 33) accomodating the antenna has a width at most equal to half of the width of the profiled section (13, 14) and in that in a door with two mobile panels, each of the two grooves is contiguous with a different face of the door.

4. The use of a detector according to any one of claims 1 to 3 for monitoring the approach of an element and in particular of a door 4 having at least one panel (5, 6).

**Ansprüche**

1. Nahdetektor für den Nachweis eines in einer bestimmten Entfernung zu einem Element (5, 6) vorhandenen Körpers, mit :

— einem Oszillator (1) mit niedriger Frequenz und schwacher Leistung, dessen Emissionspunkt (2) mit der Erde (3) gekoppelt ist, so daß dort ein sinusförmiges Signal mit konstanter Amplitude und Frequenz erzeugt wird ;

— zumindest einer Empfangsantenne (19, 20), die eine Vielzahl unabhängiger Antennenabschnitte unterteilt ist, die an dem Bereich (11, 12) des Elements (5, 6) befestigt sind, ausgehend von welchem die Überwachung des Zutritts erfolgt, der jedoch außerhalb des « direkten » Strahlenfeldes der mit der Erde gekoppelten Elemente angeordnet ist, die diesen Bereich in der üblichen Weise umgeben und damit nur indirekt auf die verschiedenen Antennenabschnitte wirken, und zwar jeweils in einem Verhältnis, das konstant bleibt ;

— eine Schaltung zur Verarbeitung der an jedem Empfangsantennenabschnitt induzierten Spannung durch Wellen, die durch die die Antenne in der üblichen Weise umgebenden Elemente sowohl reflektiert als auch abgestrahlt werden ebenso wier durch Fremdkörper, und die ausgehend von den induzierten Spannungen zunächst zwei verschiedene Signale verarbeiten, nämlich ein erstes und ein zweites Signal, dann diese Signale an eine Einrichtung für die Ausgabe eines Endsignals leiten, dessen Intensität in Abhängigkeit der Eigenschaften des ersten und des zweiten Signals, das heißt in Abhängigkeit der Anwesenheit eines Fremkörpers in der Nähe der Abschnitte der Antenne geändert wird ;

—eine Einrichtung für die Analyse dieser Signale ;

dadurch gekennzeichnet, daß die Schaltung für die Verarbeitung an jeden der Antennenabschnitte angeschlossene Einrichtungen (36, 37) für die Gleichrichtung der positiven und negativen Polwechsel des diesen Einrichtungen zugeführten Wechselsignals aufweisen, wobei jede dieser Einrichtungen in verschiedenen Schaltungen (38, 39) zwei Signale liefern, nämlich ein erstes Signal und ein zweites Signal, und daß alle Schaltungen (38) der ersten Signale, nämlich jener, die bei positivem Polwechsel ausgegeben werden, an einen (40) der Eingänge eines Komparators (21) angeschlossen sind, nämlich unter Steuerung eines Tors (30), das effektiv nur die ersten Signale an diesen Eingang liefert, die von dem Antennenabschnitt mit höchster Spannung ausgegeben werden, während alle Schaltungen (39) der zweiten Signale, nämlich jener, die bei negativem Polwechsel ausgegeben werden, an den anderen Eingang (41) des Komparators (21) angeschlossen sind, und zwar unter Steuerung eines Begrenzers (31), so daß dieser Eingang effektiv nur die Summe der zweiten Signale erhält, die durch die Anzahl der Antennenabschnitte geteilt sind.

2. Detektor nach Anspruch 1 bei Verwendung für eine Tür (4), deren beide vertikalen Ränder bzw. Kanten (11, 12) die die Öffnung begrenzen,

— einerseits durch die Kanten sowohl zweier beweglicher Platten (5, 6) als auch einer beweglichen und einer unbeweglichen Platte, zum Beispiel in Form eines Pfostens gebildet werden

— und andererseits nach dem eventuellen Einsatz einer Fuge (10) aus isolierendem Werkstoff mit einer metallischen Abdeckung bzw. Abschirmung (13, 14) verkleidet werden, dadurch gekennzeichnet, daß die Abschirmung bzw. Abdeckung (13, 14) U-profilförmig ausgebildet ist, den Rand bzw. die Kante der betreffenden Platte umgibt und an der Außenseite eine Hohlschiene (32, 33) für die Aufnahme der Antenne aufweist.

3. Detektor nach Anspruch 2, dadurch gekennzeichnet, daß die die Antenne aufnehmende Schiene (32, 33) eine Größe aufweist, die höchstens gleich der Hälfte der Größe des Profileisens (13, 14) ist, und daß bei einer Tür mit zwei beweglichen Platten jede der beiden Hohlrillen an einer anderen Seite der Tür anliegt.

4. Verwendung eines Detektors nach einem der Ansprüche 1 bis 3 für die Überwachung des Betretens eines Elements, insbesondere einer Tür (4), die zumindest eine Platte (5, 6) aufweist.

Fig. _1

Fig. _3

Fig. _2